Europäisches Patentamt

European Patent Office

Office européen des brevets

(11) Veröffentlichungsnummer: **0 157 429 B1**

(12) **EUROPÄISCHE PATENTSCHRIFT**

(45) Veröffentlichungstag der Patentschrift: **14.08.91**

(21) Anmeldenummer: **85104169.9**

(22) Anmeldetag: **04.04.85**

(51) Int. Cl.⁵: **A01C 1/08**

(54) Mobile Mischvorrichtung zum Beizen von Saatgut.

(30) Priorität: 06.04.84 DE 3412929
26.05.84 DE 3419770
04.07.84 DE 3424507
07.11.84 DE 3440551

(43) Veröffentlichungstag der Anmeldung:
09.10.85 Patentblatt 85/41

(45) Bekanntmachung des Hinweises auf die
Patenterteilung:
14.08.91 Patentblatt 91/33

(84) Benannte Vertragsstaaten:
DE FR GB SE

(56) Entgegenhaltungen:
AU-A- 32 686          AU-B- 471 467
CA-A- 1 026 256       DE-A- 2 007 512
DE-A- 2 024 687       DE-A- 2 208 626
DE-C- 435 551         FR-A- 1 151 793
FR-A- 2 159 842       FR-A- 2 292 656
FR-A- 2 463 043       US-A- 2 998 152
US-A- 3 721 179       US-A- 4 030 593

(73) Patentinhaber: **Amazonen-Werke H. Dreyer
GmbH & Co. KG
Postfach 51
W-4507 Hasbergen-Gaste(DE)**

(72) Erfinder: **Dreyer, Heinz, Dr. Dipl-Ing.
Am Amazonenwerk 7
W-4507 Hasbergen(DE)**
Erfinder: **Averdiek-Bolwin, Heinz, Dipl.-Ing.
Am Naturpark 29
W-4504 Georgsmarienhütte(DE)**
Erfinder: **Bresch, Robert, Dipl.-Ing.
Berliner Ring 26
W-4550 Bramsche(DE)**

(74) Vertreter: **Patentanwälte Grünecker, Kinkeldey, Stockmair & Partner
Maximilianstrasse 58
W-8000 München 22(DE)**

EP 0 157 429 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine mobile Beladevorrichtung zum portionsweisen überladen von Saatgut, nach dem Oberbegriff des Anspruchs 1.

Aus der zur Oberbegriffsbildung herangezogenen DE-OS-2208626 ist eine Maschine zum Transport von gekörntem und pulverförmigen Material mit einem Vorrats- oder Transportbehälter bekannt, in welchem zum zwecke des Beizens von Saatgut ein Mischorgan angeordnet ist. Das Mischorgan ist als Taumelwelle ausgebildet. Aufgrund dieser Ausbildung und auch wegen der Abmessungsunterschiede zwischen der Rühreinrichtung und dem vorratsbehälter ist eine gleichzeitige intensive Duchmischung beim Beizvorgan nicht möglich, sodaß eine schlechte Beizqualität erhalten wird.

Eine andere mobile Beladevorrichtung ist aus der die DE-A-20 07 512 bekannt. In den Einschüttbehälter werden Saatgut und Beizmittel eingefüllt und durch die als Schnecke ausgebildete Fördereinrichtung in den Vorratsbehälter der Drillmaschine eingefüllt, wobei gleichzeitig das Saatgut mit dem Beizmittel bis zu einem gewissen Grad durchmischt und ersteres somit entsprechend gebeizt wird. Der Mischeffekt bzw. die Beizwirkung der Fördereinrichtung ist jedoch nicht ausreichend, um das Saatgut vollständig zu beizen. Folglich wird nur teilgebeiztes bzw. vorgebeiztes Saatgut in den Vorratsbehälter der Drillmaschine eingefüllt, so daß das Fertigbeizen in der Drillmaschine selbst vorgenommen werden muß. Dies geschieht entweder durch eine im Vorratsbehälter vorgesehene Rühreinrichtung oder durch eine Einrichtung, die eine Umlauf- und Umpumpbewegung des Saatgutes und des Beizmittels ermöglicht. Die bekannte Beladevorrichtung kann folglich zum Zweck des Überladens von zu beizendem oder anderweitig zu behandelndem Saatgut nur für speziell ausgerüstete Drillmaschinen, nicht jedoch für einfache, d.h. solche ohne Rühreinrichtung in Vorratsbehälter und ohne Umlaufmöglichkeit für das Saatgut, eingesetzt werden. Ebenfalls nicht möglich ist der Einsatz dieser bekannten Beladevorrichtung für das Beizen von Saatgut mit einem Feuchtbeizmittel.

In der Broschüre "Technik der Getreidebeizung" von Johannes van de Sandt, Ausgabe Februar 1984, 6. Auflage, ist auf den Seiten 44 und 45 das "Rako-Beizgerät BG 1000", ebenfalls mit Einschüttbehälter und Förderschnecke, beschrieben, mit welchem das vollständige Beizen von Saatgut im Umlaufverfahren möglich ist. Allerdings sind die dazu erforderlichen Beizzeiten unzumutbar lang. Insbesondere tritt beim ersten Beizvorgang eine Unterbeizung auf. Die Beizdauer beträgt beispielsweise beim Beizen mit Feuchtbeize 8 Minuten. Der Sävorgang muß für diesen langen Zeitraum unterbrochen werden, so daß die Beizleistung und damit auch die Flächenleistung dieses bekannten Beizgerätes unzureichend sind.

Ausgehend von diesem Stand der Technik liegt der Erfindung die Aufgabe zugrunde, eine mobile Beladevorrichtung der eingangs erwähnten Art so weiterzubilden, daß sie bei verbesserter Beizwirkung möglichst universell und mit Kostenersparnis einsetzbar ist.

Diese Aufgabe wird gelöst durch die kennzeichnenden Merkmale des Anspruch 1 gelöst.

Die Misch- und Beizfunktion der Fördereinrichtung der bekannten Beladevorrichtung ist nunmehr dem Mischorgan der erfindungsgemäßen Beladevorrichtung zugewiesen, welc hes aufgrund seiner teststehenden Anordnung in zumindest dem unteren Bereich des Einschüttbehälters und seiner Ausbildung zum gleichzeitigen intensiven Bewegen der Gesamtmenge des Saatgutes im Einschüttbehälter höchste Misch- und damit Beizleistungen erbringt.

Da die Saatkörner bei Betätigung des Mischorgans das Bestreben haben, aufgrund der Schwerkraft in den unteren Teil des Einschüttbehälters zu fallen und dort das Mischorgan angebracht ist, ergibt sich ein besonders gleichmäßiges und gründliches Durchmischen des Saatgutes. Dies trifft auch auf kleinere Portionsgrößen des Saatgutes zu, die den Einschüttbehälter nicht im vorgesehenen Ausmaß füllen. Für das gleichzeitige intensive Bewegen der Gesamtmenge des Saatgutes im Einschüttbehälter stehen dem Fachmann verschiedene Möglichkeiten zur Verfügung; beispielsweise kann er den Typ des Mischorgans, dessen Abmessungen entsprechend der üblicherweise zu verarbeitenden Portionsgroßen bestimmen. Eine herausnehmbare Anordnung des Mischorgans im Einschüttbehälter hat sie als vorteilhaft erwiesen.

Die erfindungsgemäße Beladevorrichtung kann nunmehr auch als vollwertige Mischvorrichtung und damit zum Beladen von einfachen Sämaschinen, d.h. solchen ohne Rühreinrichtungen im Vorratsbehälter bzw. ohne Umlaufbewegung des Saatgutes, mit gebeiztem Saatgut eingesetzt werden. Außerdem spart dies dem Landwirt hohe Investitionskosten für die im Stand der Technik erforderlichen speziellen Sämaschinen mit Rühreinrichtungen im Vorratsbehälter oder Umlaufbewegung des Saatgutes.

Die erfindungsgemäße Beladevorrichtung erzielt aufgrund ihres portionsweisen Mischens, bei welchem die Gesamtmenge des im Einschüttbehälter befindlichen Saatgutes gleichzeitig intensiv durchmischt wird, wesentliche kürzere Beizzeiten bei erheblich besserer Beizqualität als die speziellen Sämaschinen mit Rühreinrichtungen im Vorratsbehälter, bei denen das eingefüllte Saatgut allein schon aufgrund der Abmessungsunterschiede zwischen der Rühreinrichtung und dem Vorratsbehälter nur in Teilmengen nacheinander gemischt

wird. Durch das intensive Durcheinanderwirbeln und -wühlen der gesamten, im Einschüttbehälter befindlichen Saatgutmenge mit dem Beizmittel wird vor allem das Feuchtbeizen optimiert. Weiterhin wird die Trocknungsphase des mit einem Feuchtbeizmittel gebeizten Saatgutes verkürzt, so daß Feuchtbeizmittel mit einer kurzen Nachtrocknungsphase verwendet werden können. Versuche haben ergeben, daß die gesamte, in den Einschüttbehälter eingefüllte Saatgutmenge innerhalb von 30 Sekunden sowohl mit Trocken- als auch mit Feuchtbeizmittel fertig gebeizt wird. Aufgrund dieser enorm kurzen Beizzeit wird auch eine Oberflächenleistung der Drillmaschine und somit eine Kostenreduzierung erzielt.

Die Funktion der im Stand der Technik für das Mischen und für das Fördern verwendeten Fördereinrichtung kann auch auf das Fördern des gebeizten Saatgutes beschränkt werden, so daß es möglich ist, anstelle einer Förderschnecke ein einfaches Förderband oder einen Elevator zu benutzen. Dies bedeutet eine Konstruktionsvereinfachung und damit eine Kostenersparnis. Natürlich ist auch die Verwendung einer Förderschnecke möglich. Dies wird vorzugsweise dann der Fall sein, wenn das Mischorgan in eine bereits vorhandene herkömmliche Beladevorrichtung mit Förderschnecke eingebaut werden soll. Auch diese Nachrüstbarkeit trägt zur Kostenersparnis bei.

Insgesamt zeichnet sich die erfindungsgemäße Beladevorrichtung durch universelle Einsetzbarkeit bei gleichzeitiger Einsparung hoher Investitionskosten, durch verbesserte Beizleistung und eine einfache Konstruktion mit der Möglichkeit des Nachrüstens herkömmlicher Beladevorrichtungen mit dem erfindungsgemäßen Mischorgan auf.

Um eine intensive Durchwirbelung des Saatgutes mit dem Beizmittel und somit die Beizung in kürzester Zeit zu ermöglichen, weist das Mischorgan vorteilhafterweise Mischelemente auf, die eine aufwärtsgerichtete Bewegung auf das in den Einschüttbehälter eingefüllte Material ausüben. Saatgut und Beizmittel werden aufwärts gewirbelt, von den Mischelementen hochgeworfen und fallen dann anschließend wieder auf das durchgewirbelte Material zurück und werden so ständig bis zur Beendigung des kurzen Beizvorganges weiterbewegt und durchgewühlt.

Vorzugsweise ist ein Verschlußelement vorgesehen, mit welchem eine vom Einschüttbehälter zur Fördereinrichtung führende Einlaßöffnung verschließbar ist, so daß das Saatgut erst nach Beendigung des Beizvorganges von der Fördereinrichtung aus dem Einschüttbehälter gefördert werden kann.

Gemäß einer Weiterbildung der Erfindung kann die Fördereinrichtung oberhalb des Mischorgans wenigstens eine durch ein Verschlußelement verschließbare Auslauföffnung aufweisen. Durch diese Maßnahme wird erreicht, daß das von der Fördereinrichtung geförderte Saatgut/Beizmittelgemisch aus der Auslauföffnung, wenn diese durch das Verschlußelement nicht abgedeckt ist, ausströmt. Dies bietet die Möglichkeit, dieses Gemisch wieder zum Einschüttbehälter zurückzuführen und somit schwierig zu beizendes Saatgut im Umlaufverfahren zu beizen. Sobald die Auslauföffnung durch das Verschlußelement verschlossen ist, wird das Saatgut/Beizmittel-Gemisch an der Auslauföffnung vorbei bis zum Vorratsbehälter der Drillmaschine gefördert.

Vorteilhafterweise weist die Fördereinrichtung einen Mischeffekt auf, beispielsweise durch Verwendung einer Förderschnecke, so daß ihr unterhalb der Auslauföffnung befindlicher Teil bei geöffneter Auslauföffnung als zusätzliches Mischorgan dient. Um den Rückfluß des aus der Auslauföffnung strömenden Saatgut/Beizmittel-Gemisches zum Einschüttbehälter zu erleichtern, kann eine Rücklaufeinrichtung zwischen der Auslauföffnung und dem Einschüttbehälter verwendet werden.

Ein besonders einfacher Antrieb von Fördereinrichtung und Mischorgan kann dadurch erreicht werden, daß beide gemeinsam von einem Antrieb angetrieben werden.

Um den Einsatzbereich der erfindungsgemäßen Beladevorrichtung erheblich zu erweitern, ist vorteilhafterweise eine Kupplung im Antrieb zwischen Mischorgan und Fördereinrichtung angeordnet. Damit kann das Mischorgan außer Betrieb und die Beladevorrichtung als reine Überladevorrichtung von bereits auf dem Hof mit der Beladevorrichtung gebeiztem Saatgut von einem Anhänger oder Kipper zum Vorratsbehälter einer Drillmaschine eingesetzt werden. In gleicher Weise kann die erfindungsgemäße Beladevorrichtung auch zum Überladen von Dünger von einem Kipper in einen Düngerstreuer eingesetzt werden. In diesem Fall ist es zweckmäßig, eine Fördereinrichtung, insbesondere Schneckenelemente, aus nichtrostendem Material vorzusehen.

Das Mischorgan kann in einfachster Weise als Schnecke ausgebildet sein. Durch die zusätzliche Anordnung von Rührelementen zu den Schneckenelementen kann die Misch- und Beizwirkung des Mischorgans verstärkt werden. Damit das im untersten Bereich des Einschüttbehälters befindliche Saatgut direkt von der Schnecke durchwühlt wird, sollten die Schneckenelemente zumindest annähernd bis zum Boden des Einschüttbehälters reichen. Der Hüllkreisdurchmesser der Schneckenelemente kann kleiner oder größer als der Hüllkreisdurchmesser der Rührelemente sein. Die Anordnung von Leitvorrichtungen im Einschüttbehälter zum intensiven Umrühren des Saatgutes kann unter Umständen die Beizwirkung verstärken. Hierbei können zumindest an den beiden Enden des Mischorgans Leitbleche angeordnet sein.-Um

eine genaue Beizwirkung zu erzielen, ist gemäß einer Weiterbildung der Erfindung eine Dosiereinrichtung für Beizmittel an dem Einschüttbehälter angeordnet. Durch die Anordnung eines Einschüttgitterrostes im Einschüttbehälter wird das Einschütten des Saatgutes erleichtert und verhindert, daß harte Fremdkörper in das Mischorgan gelangen.

Um die erfindungsgemäße Belade vorrichtung auch mit Drillmaschinen, die Vorratsbehälter großer Breite aufweisen, in effizienter Weise einsetzen zu können, weist die Fördereinrichtung an ihrem Auslaufende vorteilhafterweise ein bewgbares Leitorgan auf. Hierdurch ist es möglich, den Vorratsbehälter gleichmäßig mit Saatgut zu befüllen, ohne daß dasselbe nachträglich von Hand verteilt werden muß. Durch dieses Leitorgan und eine sich schräg nach oben erstreckende Fördereinrichtung wird unter der dem Einschüttbehälter abgewandten Seite der Beladevorrichtung ein großer und tiefer Freiraum geschaffen, so daß auch moderne Drillmaschinen mit weit nach hinten ragenden Anbauteilen direkt gleichmäßig befüllt werden können. Das Leitorgan, auch als Auslaufrüssel zu bezeichnen, kann entweder als Schlauch oder Rohr ausgebildet sein. Es ist natürlich auch möglich, die Fördereinrichtung selbst schwenkbar, beispielsweise manuell oder mittels Hydraulikzylinder oder elektrisch angetriebener Verstellzylinder, auszubilden.

Vorzugsweise wird dieses Leitorgan mittels einer zumindest annähernd bis zur Hinterseite des Einschüttbehälters reichenden Steuereinrichtung hin- und herbewegt. In einfachster Weise kann diese Steuereinrichtung als Stange ausgebildet sein. Diese kann an der Fördereinrichtung gelagert sein, um ihre Führung und damit die Bewegung des Leitorgans zu erleichtern. Damit alle Bereich des Vorratsbehälters der Drillmaschine gefüllt werden können, kann die Stange in der Lagerung hin- und herverschiebbar und in allen Richtungen beweglich sein.

Eine in ähnlicher Weise als Hebel ausgebildete und gelagerte Steuereinrichtung kann auch für das Verschlußelement vorgesehen sein, um dieses von der Rückseite des Einschüttbehälters bzw. von der Ladeplattform eines Anhängers aus in seine Schließ- bzw. Offenstellung zu bewegen. Es ist jedoch auch möglich, daß die Steuereinrichtung für das Verschlußelement zwei Hebel aufweist, deren einer oberhalb des Einschüttbehälters angeordnet und deren anderer von der der Fördereinrichtung abgewandten Seite des Einschüttbehälters zu betätigen ist.

Um eine bequeme Bedienung zu erreichen, kann an der Beladevorrichtung ein Laufsteg angeordnet sein, der zumindest annähernd von der Plattform eines Anhängers bis zum Vorratsbehälter einer Drillmaschine reicht.

Eine weitere Einsatzmöglichkeit der erfindungsgemäßen Beladevorrichtung ergibt sich, wenn das Auslaufende der Fördereinrichtung derart angeordnet ist, daß der Vorratsbehälter einer Drillmaschine oder auf der Ladeplatteform eines Anhängers befindliche Säcke, die beispielsweise durch eine am leitorgan angeordnete Befestigungseinrichtung gehalten werden können, befüllbar sind bzw. das gebeizte Saatgut auf den Anhänger befördert werden kann. Hierdurch ist es möglich, schon einige Tage vor dem Aussäen des Saatgutes dasselbe auf dem Hof zu beizen und dann anschließend die erfindungsgemäße Beladevorrichtung nur als Überladevorrichtung zu benutzen. Es bleibt jedoch auch die Möglichkeit erhalten, das Saatgut erst direkt auf dem Felde kurz vor dem Einfüllen in den Vorratsbehälter der Drillmaschine zu beizen.

Vorteilhafterweise kann eine erfindungsgemäße Beladevorrichtung mit einem Fahrwerk und einer mit einer Anhängekupplung eines Fahrzeuges kuppelbaren Zugeinrichtung um die Achse der Laufräder des Fahrwerkes von einer Betriebsstellung in eine Transportstellung und zurück schwenkbar sein. Dies ermöglicht eine Betriebsstellung, in welcher der untere Teil der Beladevorrichtung direkt auf dem Boden aufsteht, so daß der Einschüttbehälter eine niedrige Einfüllkante aufweist und somit sowohl vom Boden oder von einer Ladeplattform aus mit in Säcken abgefülltem Saatgut als auch direkt vom Kipper aus befüllt werden kann. Gleichzeitig kann die erfindungsgemäße Beladevorrichtung in einfachster Weise von der Betriebs- in die Transportstellung und zurück gebracht werden. Außerdem weist sie eine ausreichend große Bodenfreiheit für den Transport auf, obwohl sie in der Betriebsstellung direkt auf dem Boden aufsteht.

Damit eine Bedienungsperson ohne zusätzliche Hilfsmittel die Beladevorrichtung von der Betriebs- in die Transportstellung und zurück schwenken kann, kann weiterhin vorgesehen sein, daß der Schwerpunkt der Beladevorrichtung, wenn diese sich in der Betriebsstellung befindet, auf der dem Einschüttbehälter zugewandten Seite der Laufradachse dicht vor derselben angeordnet ist.Hierdurch ergibt sich noch der zusätzliche Vorteil, daß die Beladevorrichtung aufgrund der Schwerpunktlage ohne zusätzliche Abstützung in der Betriebsstellung sicher steht.

Zur Erzielung großer Mobilität kann das Fahrwerk so ausgelegt sein, daß die Beladevorrichtung auf öffentlichen Straßen und Wegen mit der Schlepperhöchstgeschwindigkeit gefahren werden kann, und daß das Fahrwerk für die Fahrt auf dem Felde ausreichende Bodenfreiheit, zumindest 20 cm aufweist.

Ein besonders gutes Fahr- und Lenkverhalten kann erreicht werden, wenn die Zugeinrichtung im oberen Bereich der Fördereinrichtung an der Beladevorrichtung angeordnet ist.Hierdurch ist der hintere, über die laufradachse überstehende Teil sehr kurz, so daß in Kurven das hintere Teil nur sehr kurz seitlich herumschwenkt. Außerdem kann die Zugeinrichtung so ausgebildet sein, daß das obere Leitorgan bei sich in Transportstellung befindlicher Beladevorrichtung eine ausreichende Bodenfreiheit aufweist.

Es ist weiterhin möglich, die Zugeinrichtung oder Deichsel abnehmbar am Fahrgestell anzuordnen. Dadurch kann der Vorratsbehälter sehr dicht an die Fördereinrichtung herangefahren werden. Es ist ferner möglich, verschiedenartig ausgebildete Deichseln an dem Fahrgestell anordnen zu können, so daß diese auf die unterschiedlichsten Einsatzfälle abgestimmt, in optimaler Weise an die Beladeeinrichtung anzuordnen sind. Auch kann die Deichsel in eine Betriebs- und in eine Außerbetriebsstellung gebracht werden. Außerdem ist es möglich, die Deichsel an verschiedenen Stellen am Fahrgestell anzuordnen. In diesem Fall kann die Deichsel entsprechend dem jeweiligen Einsatzfall an der am besten geeigneten Stelle angeordnet werden. Auch kann die Deichsel schwenkbar in verschiedenen Positionen festsetzbar an dem Fahrgestell angeordnet sein.

Um eine genaue Beizung zu erzielen,ist vorzugsweise an dem Einschüttbehälter eine Anzeigeeinrichtung zum Anzeigen der eingefüllten Saatmenge angeordnet. Diese Maßnahme ist besonders vorteilhaft, wenn das Saatgut nicht in Säcken, sondern von Anhängern oder Kippern aus in den Einschüttbehälter eingefüllt werden muß. Zweckmäßigerweise ist hierzu am Einschüttbehälter ein einstellbarer Zeiger angeordnet. Weiterhin kann zur Bestimmung der Menge an dem Einschüttbehälter eine Waage angeordnet sein.

Um den Einsatzbereich der erfindungsgemäßen Vorrichtung weiter zu vergrößern, ist es vorteilhaft, die Zugeinrichtung im Bereich des Einschüttbehälters auf der der Auslaßöffnung der Fördereinrichtung abgewandten Seite des Einschüttbehälters an der Beladevorrichtung anzuordnen. Mit dieser Maßnahme wird der Nachteil der aus dem Stand der Technik bekannten Beladevorrichtungen mit auf der der Einschüttöffnung des Einschüttbehälters gegenüberliegenden Auslaufseite angeordneten Zugeinrichtung überwunden, welcher Nachteil darin besteht, daß beim Zugbetrieb durch einen Anhänger kein Beladen der Beladevorrichtung vom Anhänger aus möglich ist. Das Beladen kann vielmehr erst dann erfolgen, wenn die Beladevorrichtung vom Anhänger abgekuppelt und gewendet ist, so daß sie mit ihrer Einschüttöffnung dem Anhänger zugewandt ist. Mit der erfindungsgemäßen Maßnahme hingegen bleibt die Beladevorrichtung auch während des Beladens mit dem ziehenden Fahrzeug in Verbindung. Lästige Umbauarbeiten entfallen. Beim Beizen des Saatgutes am Feldrand kann die komplette Beladevorrichtung leicht mit dem Anhänger mitgeführt werden, was besonders bei kleinen Parzellen von Vorteil ist, da das zeitaufwendige Ab- und Ankoppeln der Beladevorrichtung entfällt.

Gemäß einer Weiterbildung der Erfindung ist die Zugeinrichtung um eine horizontale Achse in der Höhe verschwenkbar und ihre Anhängekupplung in der Höhe verstellbar. Zwischen der Zugeinrichtung und der Beladevorrichtung können Feststellelemente zum Feststellen der ersteren in der eingestellten Stellung an der Beladevorrichtung angeordnet sein.Hierdurch läßt sich die Beladevorrichtung auf einfachste Weise von der Tansport- in die Betriebsstellung überführen und bleibt gleichzeitig mit dem Anhänger verbunden.

Vorzugsweise ist die Anhängekupplung der Zugeinrichtung in der Stellung, in welcher die Beladevorrichtung in Betriebsstellung auf dem Boden aufsteht, zumindest in begrenztem Umfang, vorzugsweise etwa 20 cm, auf- und abbewegbar. Infolge dieser Maßnahme handelt es sich um keine starre Verbindung zwischen dem ziehenden Fahrzeug und der Beladevorrichtung. Letztere kann somit während ihres Einsatzes auf dem Felde -ohne Notwendigkeit, die Beladevorrichtung in Transportstellung zu bringen- von dem Zugfahrzeug über kurze Weglängen mitgezogen werden.

An der Unterseite der Beladevorrichtung kann ein als Schleifkufe ausgebildetes Abstellelement angeordnet sein. Diese Schleifkufe ist zweckmäßigerweise großflächig ausgebildet und weist auf der auf dem Boden aufstehenden Seite eine konvexe Form auf. Durch die großflächige, konvexe Form der Schleifkufe sowie der begrenzten Auf- und Abbeweglichkeit der Beladevorrichtung ist es möglich, dieselbe auf dem Felde weiterzuziehen, ohne daß sie dabei Beschädigungen davonträgt. Die erfindungsgemäße Beladevorrichtung wird durch die Kufe über Bodenunebenheiten unbeschadet hinweggeleitet. Wird das Abstellelement als Rad ausgebildet, lassen sich die gleichen Vorteile wie mit der Schleifkufe erzielen.

Ferner sieht die Erfindung vor, daß verschiedene Antriebsorgane für den Antrieb vorgesehen sind. Somit wird ein universeller Antrieb geschaffen, so daß verschiedene Antriebsorgane, wie Hydraulikmotor, Elektromotor oder Schlepperzapfwelle die erfindungsgemäße Beladevorrichtung antreiben können. Vorzugsweise ist das Antriebsorgan als Winkelgetriebe ausgebildet, welches zumindest eine Antriebswelle aufweist. Hierbei ist es vorteilhaft, an die eine Antriebswelle eine Gelenkwelle zum Anschluß an die Schlepperzapfwelle und an die andere Antriebswelle einen Elektromotor anzuschließen. Zweckmäßigerweise sind das Winkelgetriebe und der Elektromotor auf eine gemeinsamen Konsole an der Beladevorrichtung angeordnet.

Nachstehend ist die Erfindung anhand einiger Ausführungsbeispiele unter Bezugnahme auf die Zeichnung näher beschrieben. Es zeigen:

Fig. 1 eine Seitenansicht in Prinzipdarstellung eines ersten Ausführungsbeispiels der erfindungsgemäßen Beladevorrichtung in Betriebsstellung,

Fig. 2 eine Seitenansicht der in Fig. 1 dargestellten Beladevorrichtung in Transportstellung,

Fig. 3 eine Seitenansicht in Prinzipdarstellung eines zweiten Ausführungsbeispiels der erfindungsgemäßen Beladevorrichtung in Betriebsstellung,

Fig. 4 eine Seitenansicht in Prinzipdarstellung eines Mischorgans für eine erfindungsgemäße Beladevorrichtung,

Fig. 5 eine Seitenansicht in Prinzipdarstellung einer Anzeigeeinrichtung an einer erfindungsgemäßen Beladevorrichtung,

Fig. 6 eine Seitenansicht in Prinzipdarstellung einer Wiegeeinrichtung an einer erfindungsgemäßen Beladevorrichtung,

Fig. 7 eine Seitenansicht in Prinzipdarstellung eines dritten Ausführungsbeispieles der erfindungsgemäßen Beladevorrichtung in Betriebsstellung,

Fig. 8 eine Seitenansicht der in Fig. 10 dargestellten Beladevorrichtung in Transportstellung und

Fig. 9 eine Seitenansicht in Prinzipdarstellung eines vierten Ausführungsbeispiels der erfindungsgemäßen Beladevorrichtung in Betriebsstellung.

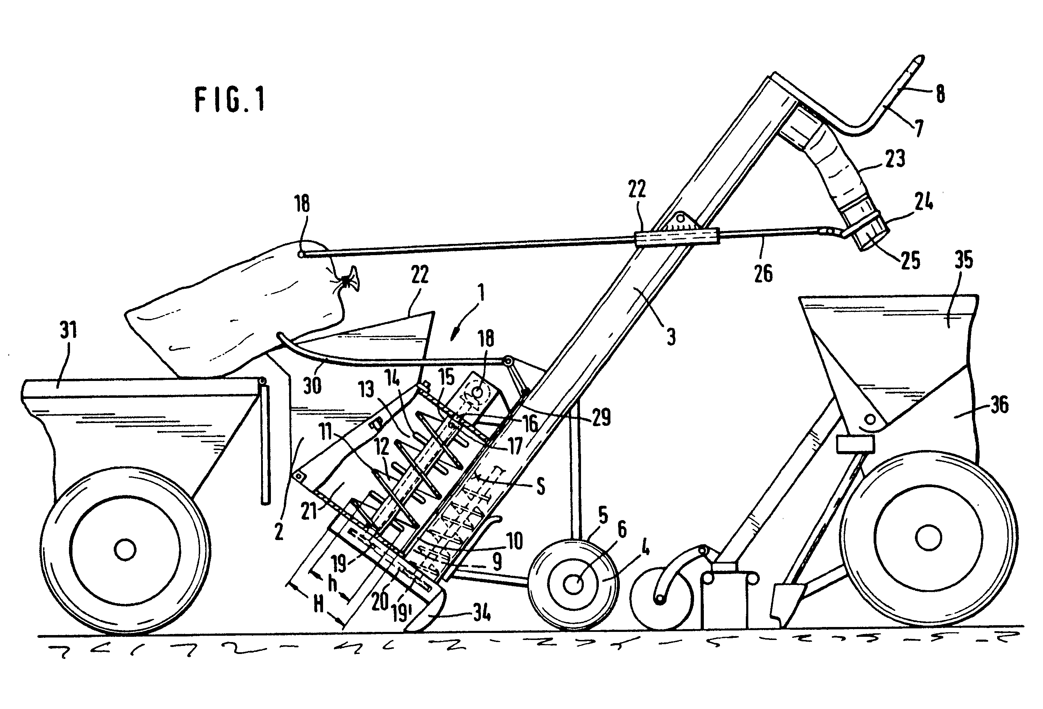

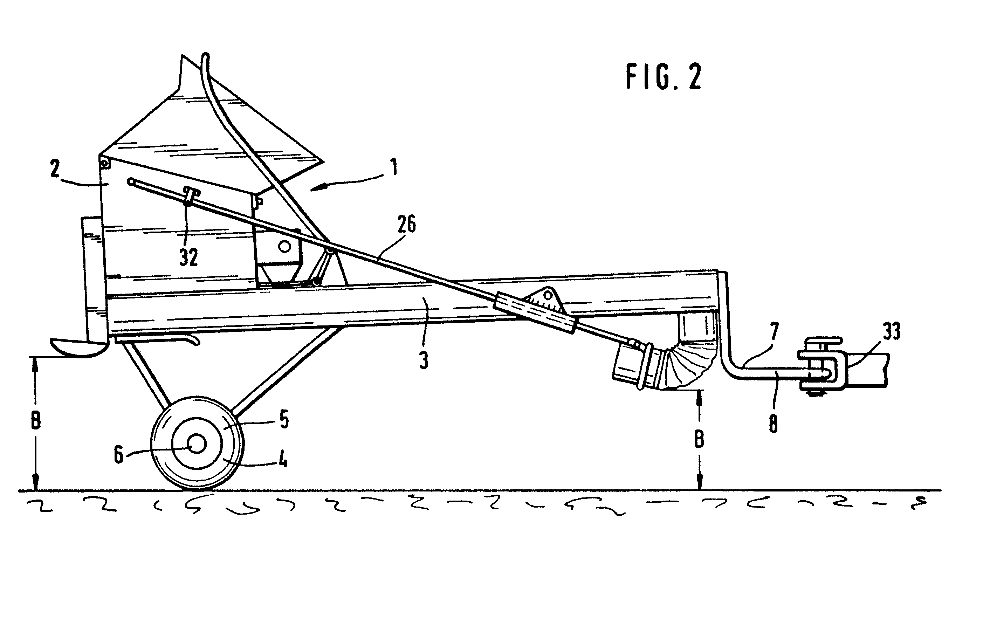

Die in Fig. 1 und 2 dargestellte erfindungsgemäße Beladevorrichtung 1 weist einen Einschüttbehälter 2 und eine als Förderschnecke 3 ausgebildete Fördereinrichtung auf. Unter der Beladevorrichtung 1 ist ein mit Laufrädern 4 ausgestattetes Fahrwerk 5 angeordnet. Die Laufradachse 6 des Fahrwerks ist so angeordnet, daß sich der Schwerpunkt S der Beladevorrichtung 1, wenn diese sich in der in Fig. 1 gezeigten Betriebsstellung befindet, auf der dem Einschüttbehälter 2 zugewandten Seite der Laufradachse 6 befindet. Das Fahrwerk 5 ist so ausgelegt, daß die Beladevorrichtung 1 auf öffentlichen Straßen mit der Schlepperhöchstgeschwindigkeit gefahren werden kann. In der Transportstellung gemäß Fig. 2 weist die Beladevorrichtung 1 bzw. deren Fahrwerk 5 die Bodenfreiheit B von zumindest 20 cm auf. Die Förderschnecke 3 ist in einem Gehäuse angeordnet, welches sich vom Einschüttbehälter 2 aus schräg nach oben über die Laufradachse 6 hinaus erstreckt. Am oberen Ende des die Förderschnecke 3 umgebenden Gehäuses ist eine Zugeinrichtung 7 mit einer Zugdeichsel 8 angebracht. Letztere ist derart ausgeführt, daß beim Transport genügend Bodenfreiheit verbleibt.

Im Gehäuse der Förderschnecke 3 ist im unteren Bereich des Einschüttbehälters 2 eine Einlaßöffnung 9 angebracht, die mit einem als Verschlußelement 10 ausgebildeten Schieber abgedeckt werden kann. In dem Einschüttbehälter 2 ist ein Mischorgan 11 angeordnet, welches durchlaufende Schneckenelemente 12 und zusätzliche Rührelemente 14 in den Zwischenräumen 13 zwischen den Schneckenelementen 12 aufweist. Der Hüllkreisdurchmesser H der Schneckenelemente 12 ist größer als der Hüllkreisdurchmesser h der Rührelemente 14. Die Schneckenelemente 12 reichen annähernd bis zum Boden des Einschüttbehälters 2. Das Mischorgan 11 ist mit einer inneren Hohlwelle 15 ausgerüstet, die auf einer Antriebswelle 16 drehbar gelagert ist. Die Hohlwelle 15 ist durch eine als Bolzen 17 ausgebildete Kupplung mit der Antriebswelle 16 kraftschlüssig verbindbar. Das Mischorgan 11 erstreckt sich parallel zur Förderschnecke 3. Am oberen Ende der Antriebswelle 16 ist ein Winkelgetriebe 18 und am unteren Ende ein Kettenrad 19 angebracht. Ein auf einer Antriebswelle der Förderschnecke 3 befestigtes Kettenrad 19' wird über das Kettenrad 19 und eine Kette 20 angetrieben. Somit weisen das Mischorgan 11 und die Förderschnecke 3 einen gemeinsamen Antrieb auf.

Der Einschüttbehälter 2 besteht aus einem Grundbehälter 21 und einem auf diesem lösbar befestigten Aufsatzbehälter 22. Durch letzteren wird ein größeres Fassungsvermögen des Einschüttbehälters 2 erreicht. Wenn vom Boden aus Saatgut in Säcken bzw. vom Kipper aus loses Saatgut in den Einschüttbehälter 2 eingefüllt werden soll, wird der Aufsatzbehälter 22 abgenommen.

Am oberen Ende der Förderschnecke 3 bzw. deren Gehäuse befindet sich das Auslaufende der Fördereinrichtung. Dort ist ein als Schlauch 23 mit einem Rohrstück 24 ausgebildetes Leitorgan 25 angeordnet. Das Leitorgan 25 ist mittels einer als Stange 26 ausgebildeten Steuereinrichtung, die am unteren Ende des Rohrstückes 24 angreift, hin- und herbewegbar. Die Stange 26 ist an der Förderschnecke 3 bzw. deren Gehäuse in einer Rohrbuchse 27, die wiederum an der Förderschnecke 3 beweglich angeordnet ist, gelagert. Die Stange 26 ist in der Rohrbuchse 27 hin- und herverschiebbar geführt und aufgrund der beweglichen Anordnung der Rohrbuchse 27 in allen Richtungen beweglich. An der dem Leitorgan 25 abgewandten Seite der Stange 26 befindet sich ein Griff 28. Die Stange 26 ragt bis oberhalb und annähernd bis zur Rückseite des Einschüttbehälters 2.

Am Schieber 10 ist eine Verlängerungsstange 29 angeordnet, die mit einem an der Förderschnecke 3 bzw. deren Gehäuse gelagerten Hebel 30 verbunden ist. Die eine Seite des Hebels 30 reicht bis zur Rückseite des Einschüttbehälters 2. Somit können das Leitorgan 25 über die Stange 26 und der Schieber 10 über den Hebel 30 direkt von einer auf der Ladeplattform eines Anhängers 31 stehenden Bedienungsperson betätigt werden.

Wenn die Beladevorrichtung 1 von der Betriebsstellung gemäß Fig. 1 in die Transportstellung gemäß Fig.2 gebracht werden soll, wird die Stange 26 in eine an dem Einschüttbehälter 2 angeordnete Halterung 32 gelegt und befestigt. Sodann wird die Beladevorrichtung 1 um die Laufradachse 6 in die Transportstellung geschwenkt und die Zugeinrichtung in die Anhängerkupplung eines Anhängers oder Schleppers eingehängt. Die Bodenfreiheit B von zumindest 20 cm in der Transportstellung entspricht einer für die Fahrt auf dem Felde ausreichenden Bodenfreiheit.

Die Arbeitsweise der erfindungsgemäßen Beladevorrichtung ist wie folgt: Die Beladevorrichtung 1 wird in der Transportstellung gemäß Fig. 2 zum Feld gefahren. Am Feldrand wird sie in die Betriebsstellung gemäß Fig. 1 gebracht, so daß das untere Ende der Förderschnecke 3 über ein als Kufe 34 ausgebildete Abstellelement auf dem Boden aufsteht. Hierdurch ergibt sich eine niedrige Einfüllkante des Einschüttbehälters 2. Die Beladevorrichtung 1 wird an den Anhänger 31 herangeschoben bzw. der Anhänger wird an den Einschüttbehälter 2 herangefahren. Anschließend wird der Schlepper in eine Position seitlich der Beladevorrichtung 1 gefahren und die Schlepperzapfwelle über eine Gelenkwelle mit dem Winkelgetriebe 17 der Beladevorrichtung 1 verbunden. Nach Einschalten der Zapfwelle werden das Mischorgan 11 und die Förderschnecke 3 angetrieben. Sobald ein Vorratsbehälter 35 einer Drillmaschine 36 so unter die Beladevorrichtung 1 gefahren ist, daß das Auslaufende der Förderschnecke 3 sich oberhalb des Vorratsbehälters befindet, kann mit dem Beizvorgang und dem Befüllen des Vorratsbehälters begonnen werden.

Zunächst wird eine bestimmte Menge Saatgut, beispielsweise ein Doppelzentner Getreide, in den Einschüttbehälter 2 gefüllt. Der Schieber 10 verschließt dabei die Einlaßöffnung 9. Anschließend wird die erforderliche Menge Beizmittel zum Saatgut im Einschüttbehälter 2 hinzugefügt. Durch das Mischorgan 11 mit seinen Schneckenelementen 12 und Rührelementen 14 wird die gesamte, in den Einschüttbehälter 2 eingefüllte Menge Saatgut gleichzeitig intensiv bewegt und durcheinandergewirbelt. Die Schneckenelemente 12 üben auf das eingefüllte Saatgut eine aufwärtsgerichtete Bewegung aus. Das Saatgut wird hochgewirbelt und fällt, wenn es den unmittelbaren Bereich der Schneckenelemente 12 verläßt, wieder in den Einschüttbehälter 2 zurück, wo es sofort wieder von der sich in Bewegung befindlichen Saatgutmenge weiterbewegt bzw. von den Schneckenelementen 12 und den Rührelementen 14 erfaßt wird. Durch das intensive Durcheinanderwirbeln und Durchwühlen der gesamten eingefüllten Saatgutmenge wird das Beizmittel sehr schnell und gleichmäßig an die einzelnen Saatkörner angelagert. Hierbei ist vor allem das gegenseitige Aneinanderreiben der einzelnen Saatkörper von entscheidender Bedeutung.

Bereits nach einer sehr kurzen Beiz- bzw. Durchwirbelungszeit, beispielsweise etwa 30 Sekunden, ist das Saatgut sehr gut und gleichmäßig gebeizt. Dies gilt sowohl für das Beizen mit Feucht- als auch mit Trockenbeizmittel. Nach dieser kurzen Zeit kann über den Hebel 30 der Schieber 10 betätigt und die Einlaßöffnung 9 geöffnet werden, so daß das gebeizte Saatgut durch die Förderschnecke 3 in den Vorratsbehälter 35 der Drillmaschine 36 eingefüllt werden kann. Mittels der Stange 26 wird das Rohrstück 24 des Leitorgans so gesteuert, daß das Saatgut in gewünschter Weise gleichmäßig verteilt in den Vorratsbehälter 35 eingefüllt wird.

Sobald das gebeizte Saatgut aus dem Einschüttbehälter 2 in den Vorratsbehälter 35 überladen ist, wird die Einlaßöffnung 9 durch den über den Hebel 30 bewegten Schieber 10 wieder verschlossen. Falls der Vorratsbehälter 35 mit einer Füllung des Einschüttbehältes 2 noch nicht vollständig gefüllt ist, so wird in vorbeschriebener Weise eine zweite Portion Saatgut gebeizt und überladen. Wenn der Vorratsbehälter 35 vollständig gefüllt ist, wird der Antrieb der Beladevorrichtung, d.h. die Zapfwelle abgeschaltet, und das gebeizte Saatgut ausgesät. Sodann erfolgt ein neuer Beizvorgang in obenbeschriebener Weise.

Selbstverständlich kann die Beladevorrichtung 1 auch zum Beizen des Saatgutes bereits auf dem Hof einige Zeit vor dem Aussäen des Saatgutes benutzt werden. In diesem Fall wird das gebeizte Saatgut entweder auf einem Kipper gefördert oder in Säcke abgefüllt. Hierzu kann dann an dem Rohrstück 24 eine bekannte und daher nicht dargestellte Einrichtung zum Befestigen der Säcke angebracht werden.

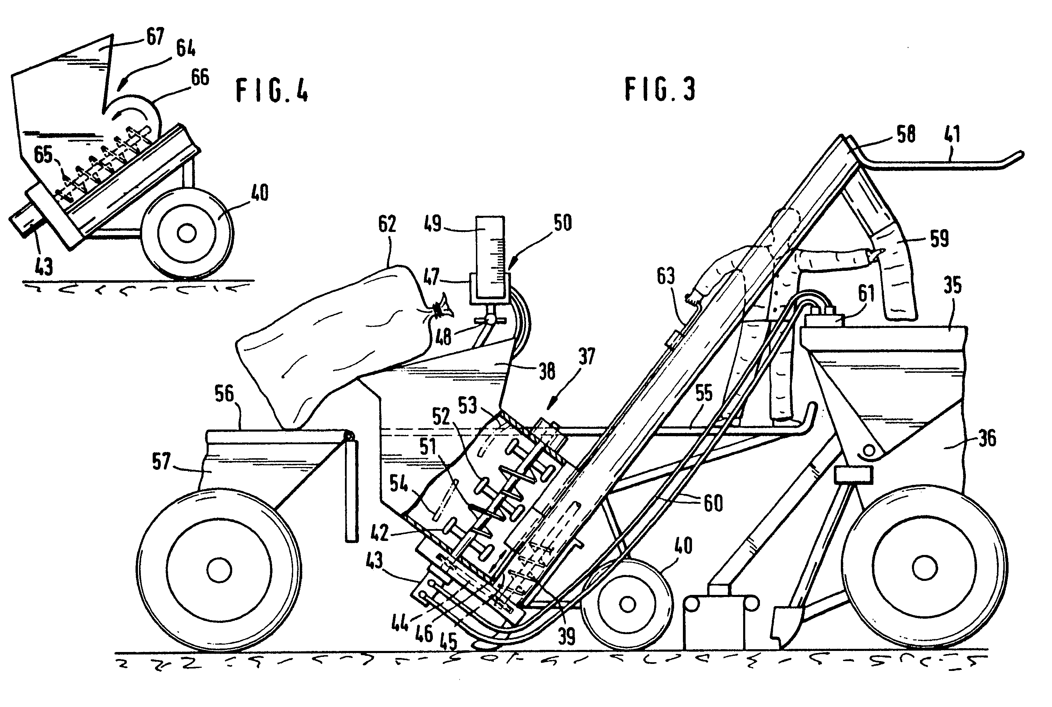

Die Beladevorrichtung 37 gemäß Fig. 3 weist den Einschüttbehälter 38 und die als Förderschnecke 39 ausgebildete Fördereinrichtung auf. Die Beladevorrichtung 39 ist mit dem Fahrwerk 40 ausgerüstet, damit sie in einfacher Weise transportiert werden kann. An dem oberen Ende der Förderschnecke 39 ist die Zugeinrichtung 41 angeordnet. Im Einschüttbehälter 38 ist das Mischorgan 42 angebracht, welches von einem Ölmotor 43 angetrieben wird. Der Antrieb des Mischorgans 42 ist über ein Kettengetriebe 44 mit dem Antrieb der Förderschnecke 39 verbunden, d.h. das Mischorgan 42 und die Förderschnecke 39 weisen als gemeinsamen Antrieb den Ölmotor 43 auf. Im unteren Bereich des Einschüttbehälters 38 befindet sich die Einlaßöffnung 45 der Förderschnecke 39. Diese Einlaßöffnung ist durch ein als Schieber 46 ausgebildetes Verschlußelement verschließbar. Oberhalb des Einschüttbehältes 38 ist an ihm eine Halterung 47 mit einem Dosierhahn 48 und einem mit Maßstrichen versehenen Beizmittelbehälter 49 befestigt. Der Dosierhahn 48 ist in Verbindung mit dem Beizmittelbehälter 49 als Beizmitteldosiereinrichtung 50 vorgesehen.

Das Mischorgan 42 weist die Schneckenelemente 51 und die Rührelemente 52 auf. Die Hüllkreise H der Schneckenelemente 51 sind kleiner als diejenigen der Rührelemente 52. Weiterhin sind in dem Einschüttbehälter 38 jeweils im Bereich der Enden des Mischorgans 42 mit strichpunktierten Linien angedeutete Leiteinrichtungen 53 und 54 zum intensiven Umrühren des Saatgutes angeordnet. An der Seite der Beladevorrichtung 37 ist ein Laufsteg 55 angebracht, der von einer Ladeplattform 56 des Anhängers 57 bis zum Vorratsbehälter 35 der Drillmaschine 36 reicht. An dem Auslaufende 58 der Fördereinrichtung 39 ist das als Schlauch 59 ausgebildete Leitorgan angeordnet.

Das Beizen des Saatgutes und das Befüllen des Vorratsbehälters der Drillmaschine erfolgt wie nachstehend beschrieben: Der Landwirt fährt mit der an einem Schlepper angekuppelten Drillmaschine 36 rückwärts an die Beladevorrichtung 37 heran, bis sich der Vorratsbehälter 35 der Drillmaschine unter dem Schlauch 59 bzw. dem Auslaufende 58 der Fördereinrichtung 39 befindet. Sodann steigt der Landwirt auf den Laufsteg 55 und schließt die an den Ölmotor 53 angeschlossenen Schläuche 60 an die an der Drillmaschine 36 befindlichen Hydraulikanschlüsse 61 an, die mit der Schlepperhydraulik verbunden sind. Der Ölmotor treibt nunmehr das Mischorgan 42 und die Förderschnecke 39 an. Anschließend überprüft der Landwirt, daß die Einlaßöffnung 45 durch den Schieber 46 verschlossen ist. Sodann geht der Landwirt über den Laufsteg auf den Anhänger 57 und schüttet Saatgut, beispielsweise Getreide, in einfacher und bequemer Weise aus einem Sack 62 in den Einschüttbehälter 38. Aus dem Beizmittelbehälter 49 fügt er sodann über den Dosierhahn 48 die erforderliche Menge Beizmittel dem im Einschüttbehälter 38 befindlichen Getreide hinzu. Durch das Mischorgan 42 wird das Getreide mit dem Beizmittel intensiv durchmischt, so daß schon nach kurzer Zeit, nach ca. 20 Sekunden, die gesamte eingefüllte Saatgutmenge gebeizt ist.

Während dieser Beizzeit geht der Landwirt auf dem Laufsteg zur Drillmaschine 36 und öffnet mittels eines am Schieber 46 befestigten Gestänges 63 die Einlaßöffnung 45, so daß das gebeizte Getreide zur Förderschnecke 39 gelangt. Letztere fördert das gebeizte Saatgut über den Schlauch 59 in den Vorratsbehälter 35 der Drillmaschine 36. Hierbei bewegt der Landwirt den Schlauch 59 so über dem Vorratsbehälter 35 hin- und her, daß dieser gleichmäßig befüllt wird. Sobald der Einschüttbehälter 38 entleert und somit die Förderschnecke 39 kein gebeiztes Getreide mehr fördert, wird die Einlaßöffnung 45 durch den Schieber 46 mittels des Gestänges 63 wieder verschlossen. Sodann geht der Landwirt über den Laufsteg 55 zum Anhänger 57, füllt einen weiteren Sack 62 mit Getreide in den Einschüttbehälter 38 ein und gibt anschließend über den Dosierhahn 48 Beizmittel zum eingefüllten Getreide zu. Während das Getreide durch das Mischorgan 42 gebeizt wird, geht der Landwirt wieder zur Drillmaschine 36 und öffnet erneut den Schieber 46, so daß das gebeizte Getreide in den Vorratsbehälter 35 der Drillmaschine 36 eingefüllt wird. Der Landwirt wiederholt diese Vorgänge solange, bis der Vorratsbehälter der Drillmaschine vollständig gefüllt ist. Sodann löst er die Schläuche 60 von den Hydraulikanschlüssen 61 und drillt das in den Vorratsbehälter 35 eingefüllte Getreide aus. Sobald dieses zur Neige geht, wird der Vorratsbehälter wieder in der vorbeschriebenen Weise mit gebeiztem Getreide über die Beladevorrichtung 37 befüllt.

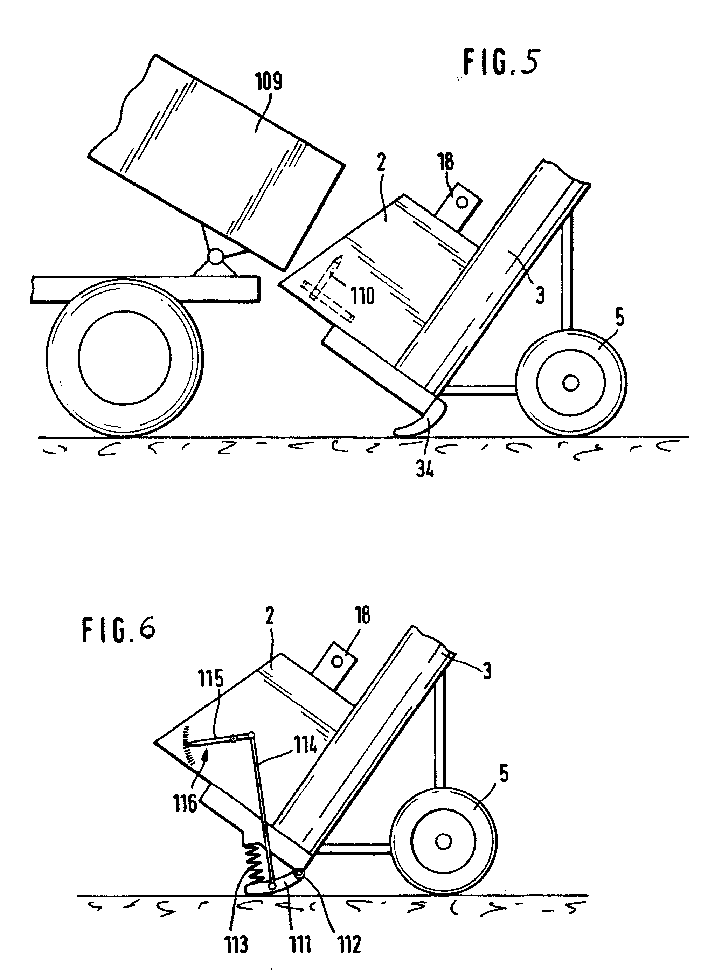

Die Beladevorrichtung 64 gemäß Fig. 4 weist ein als reines Schneckenmischorgan ausgebildetes Mischorgan 65 auf, welches vom Ölmotor 43 angetrieben wird und das Getreide mit dem zugeführten Beizmittel ebenfalls umrührt. Dabei erfährt das Getreide durch die bogenförmige obere Gehäusewand 66 des Einschüttbehälters 67 und das Mischorgan 65 eine intensive Umlaufbewegung, so daß es in kürzester Zeit gebeizt ist. Das Einfüllen des gebeizten Getreides in den Vorratsbehälter der Drillmaschine geschieht in der vorstehend beschriebenen Weise.

Die Beladevorrichtung gemäß Fig. 5 entspricht der Beladevorrichtung gemäß Fig. 1. In ihr ist der Aufsatzbehälter 22 des Einschüttbehälters 2 entfernt worden, so daß vom Kipper 109 aus das zu beizende Saatgut direkt in den Einschüttbehälter 102 gefüllt werden kann. In diesem ist eine als einstellbarer Zeiger 110 ausgebildete Anzeigeeinrichtung angebracht, die zur Anzeige der in den Einschüttbehälter 2 eingefüllten Menge von Saatgut dient. Hierbei wird zunächst so vorgegangen, daß eine abgewogene Menge Saatgut in den Behälter 2 eingefüllt wird. Auf die Füllhöhe dieser abgewogenen Menge Saatgut wird dann der Zeiger eingestellt. Der Bedienungsmann kann jetzt jeweils solange Saatgut aus dem Kipper einlaufen lassen, bis die eingestellte Hohe erreicht ist. Dieser bestimmten Menge Saatgut wird dann die jeweils entsprechende Menge Beizmittel zugegeben.

Die Beladevorrichtung gemäß Fig. 6 entspricht ebenfalls der Beladevorrichtung gemäß Fig. 1. Bei ihr ist eine Kufe 111 mittels eines Gelenkes 112 befestigt. Zwischen der Kufe 111 und der Förderschnecke 3 ist eine Feder 113 angebracht. An der Kufe 111 ist ein Gestänge 114 mit einem Anzeigehebel 115 angeordnet. Hierdurch wird eine als Wiegeeinrichtung 116 ausgebildete Anzeigeeinrichtung geschaffen. Durch diese Wiegeeinrichtung 116 wird das jeweils in den Einschüttbehälter 2 lose eingefüllte Saatgut gewogen, so daß man die jeweils erforderliche Menge Beizmittel dazugeben kann.

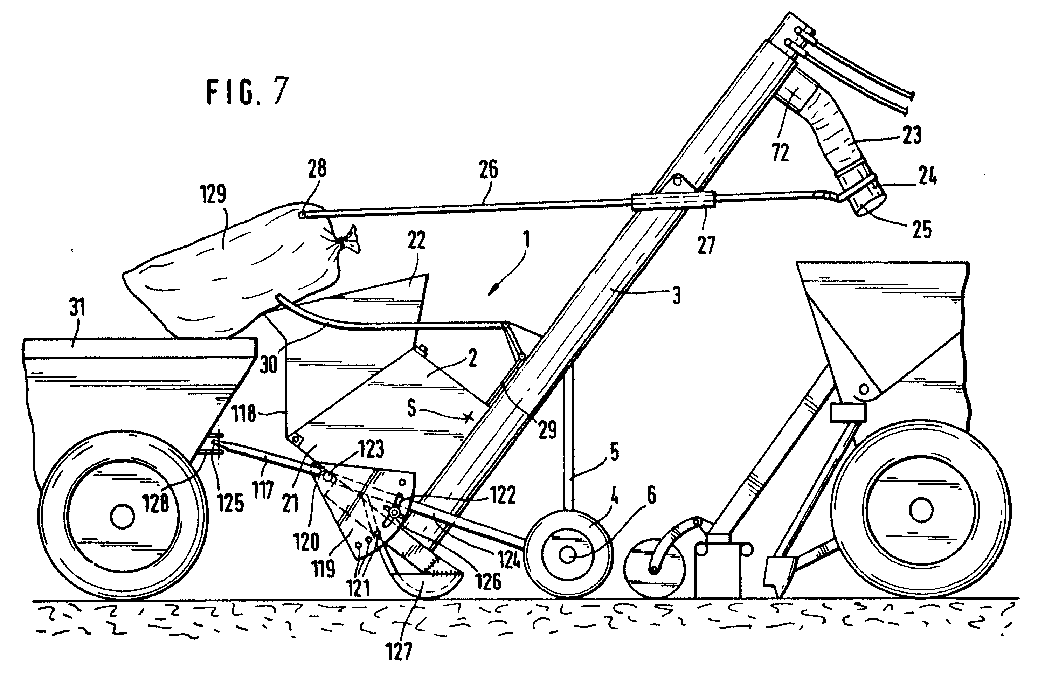

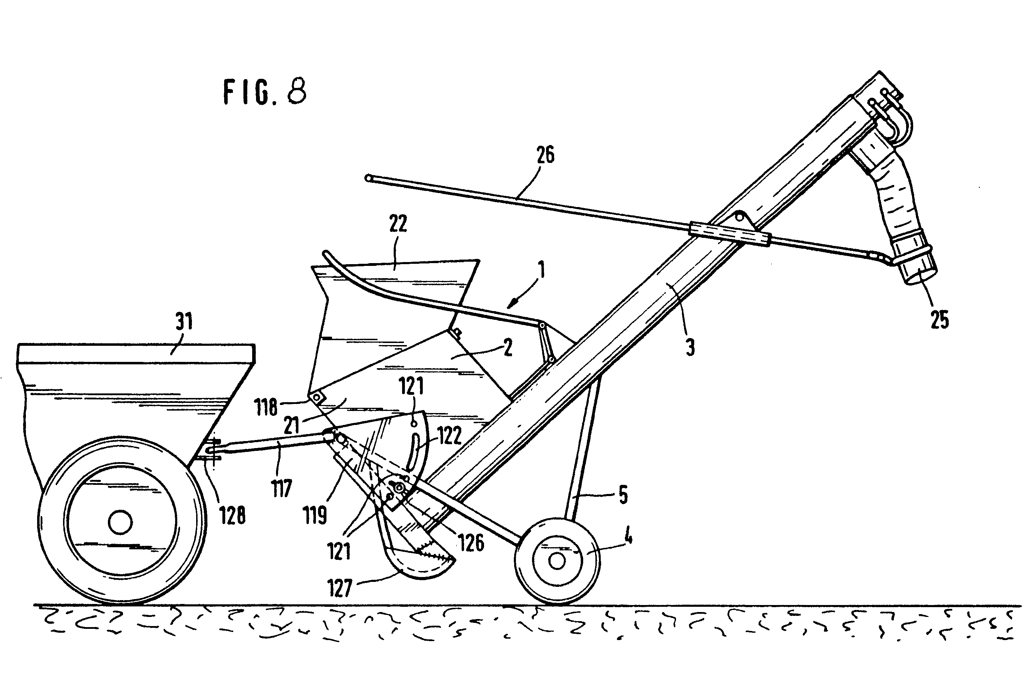

Bei der Beladevorrichtung gemäß Fig. 7 und 8 ist die als Deichsel 117 ausgebildete Zugeinrichtung auf der der Auslaßöffnung oder dem Auslaufende 72 der Fördereinrichtung 3 abgewandten Seite 118 im Bereich des Einschüttbehälters 2 an der Beladevorrichtung 1 angeordnet. Die Deichsel 117 ist an einem Verstellelement 119 angeschweißt und bildet somit eine Zugeinheit 120. Das Verstellelement 119 weist mehrere Bohrungen 121 sowie ein Langloch 122 auf, die als Verstellmöglichkeiten dienen. Das Verstellelement 119 ist ferner mit einem Bolzen 123 an dem Rahmen 124 des Fahrwerkes 5 in der Höhe verstellbar und verschwenkbar angeordnet, so daß die Anhängekupplung 125 der Zugeinrichtung 117 in unterschiedlichen Höhen in Bezug auf die Beladevorrichtung 1 angeordnet werden kann. Die Deichsel 117 ist um die durch die Bolzen 123 verlaufende horizontale Achse verschwenkbar. In die Bohrungen 121 und in das Langloch 122 rasten als Riegel 126 ausgebildete Feststellelemente zum Feststellen der Deichsel 117 in ihrer eingestellten und gewünschten Stellung ein. In der Betriebsstellung gemäß Fig. 10 sind die Riegel 126 in das Langloch 122 eingerastet, so daß die Beladevorrichtung 1 in begrenztem Umfang auf- und abbewegbar ist. Dies ist vor allem wichtig, wenn die Beladevorrichtung 1 in Betriebsstellung, also ohne in Transportstellung gebracht zu werden, beispielsweise von einem Anhänger 31 um eine Weglänge am Feldende weitergezogen werden soll. In dieser Betriebsstellung ist die Anhängekupplung 125 um etwa 20 bis 30 cm gegenüber der Beladevorrichtung 1 auf- und abbewegbar. Weiterhin ist auf der Unterseite der Beladevorrichtung 1 am Rahmen das Fahrwerkes 5 ein als Schleifkufe 127 ausgebildetes Abstellelement angeordnet. Diese Schleifkuve 127 ist möglichst großflächig ausgebildet und weist auf der auf dem Boden aufstehenden Seite ein konvexe Form auf. Beim Weiterziehen der Beladevorrichtung 1 in der Betriebsstellung schleift die Schleifkufe 127 über den Boden und hebt die Beladevorrichtung somit über Bodenunebenheiten hinweg, wodurch Beschädigungen vermieden werden.

Die Beladevorrichtung 1 ist über die Anhängekupplung 125 der Zugeinrichtung 117 an die als Zugmaul 128 ausgebildete Anhängekupplung des Anhängers 31 angekuppelt. Während des Transports auf der Straße und auf Wegen wird die Beladevorrichtung in die Transportstellung gemäß Fig. 11 gebracht, wobei die Rigel 126 in eine der Bohrungen 121 einrasten. Die Beladevorrichtung 1 ist während des Einsatzes in die Betriebsstellung gemäß Fig. 10 gebracht, wobei die Riegel 126 in das Langloch 122 eingerastet sind. In dieser Stellung der Beladevorrichtung 1 kann von dem Anhänger 31 aus das Saatgut sehr bequem aus Säcken 129 in den Einschüttbehälter 2 gekippt werden. In dieser Betriebsstellung kann die Beladevorrichtung 1, wie vorstehend beschrieben, ohne in Transportstellung gebracht bzw. vom Anhänger 31 abgekoppelt werden zu müssen, weitergezogen werden.

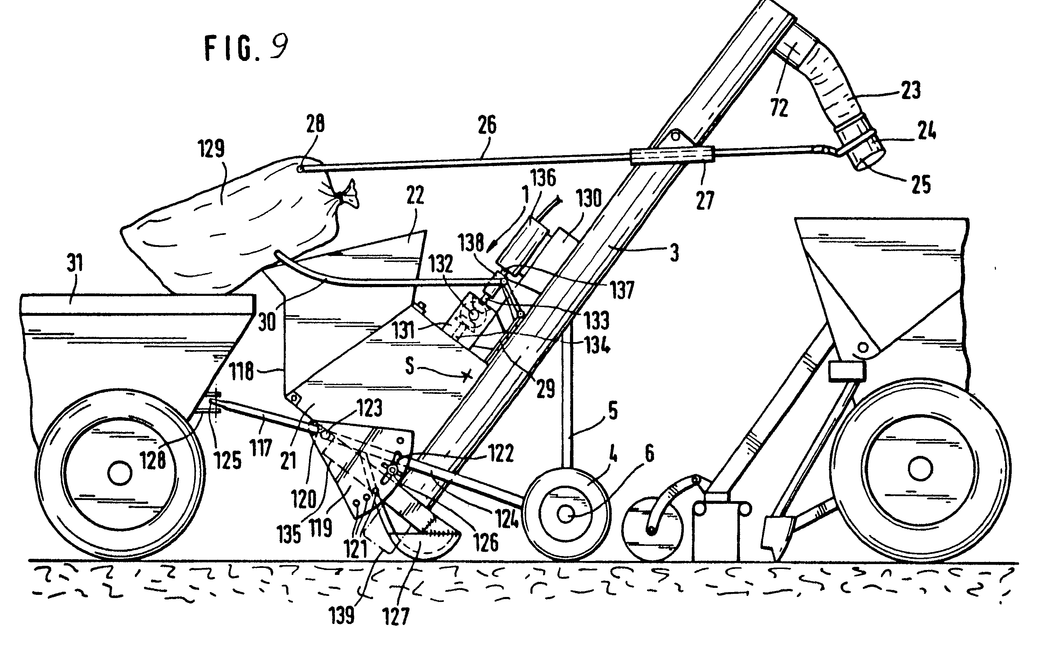

Fig. 9 zeigt die erfindungsgemäße Beladevorrichtung mit verschiedenen Antriebsorganen. Oberhalb des Grundbehälters 21 ist die Konsole 130 angeordnet, auf welcher das Winkelgetriebe 131 mit den beiden Antriebswellen 132 und 133 befestigt ist. Die Ausgangswelle 134 des Winkelgetriebes 131 treibt das im Grundbehälter 21 angeordnete Mischorgan und über das Getriebe 135 die Fördereinrichtung 3 an. Da die Antriebswelle 132 ein Keilprofil aufweist, kann an sie eine Gelenkwelle angeordnet werden. Über diese Gelenkwelle sind dann das Mischorgan und die Fördereinrichtung 3 anzutreiben. Weiterhin ist auf der Konsole 130 der Elektromotor 136 angeordnet, dessen Ausgangswelle 137 über die Freilaufkupplung 138 mit der Antriebswelle 133 des Winkelgetriebes 131 gekuppelt ist. Somit können das Mischorgan und die Fördereinrichtung 3 beispielsweise beim Beizen von Getreide auf dem Hof vom Elektromotor 136 angetrieben werden. Aufgrund der Freilaufkupplung 138 braucht der Elektromotor 136 nicht abgebaut zu werden, wenn auf dem Feld der Antrieb über die an die Antriebswelle 132 angeschlossene Gelenkwelle erfolgt.

Weiterhin kann für den Antrieb der Beladevorrichtung anstelle des Winkelgetriebes 131 der mit strichpunktierten Linien angedeutete Hydraulikmotor 139 vorgesehen sein, der über Hydraulikschläuche an die Hydraulikanlage eines Schleppers anzuschließen und anzutreiben ist.

Somit kann die Beladevorrichtung jeweils mit dem gewünschten Antriebsorgan in einfacher Weise ausgestattet werden. Es ist also möglich, eine Grundversion der Beladevorrichtung ohne Antriebsorgan anzubieten. Der Landwirt kann dann jeweils, wenn er die Beladevorrichtung erwirbt, sich für das für ihn am geeignetsten darstellende Antriebsorgan entscheiden. Die Beladevorrichtung wird dann mit diesem gewünschten Antriebsorgan (Winkelgetriebe mit einer oder zwei Antriebswellen, Elektromotor und/oder Hydraulikmotor) ausgerüstet.

**Patentansprüche**

1. Mobile Beladevorrichtung zum portionsweisen Überladen von Saatgut, insbesondere von Getreide, mit einem Einschüttbehälter (2, 38, 67) zur Aufnahme des Saatguts und einer mit dem Einschüttbehälter verbundenen Schneckenfördereinrichtung (3, 39) zum Abfördern des Saatguts in z.B. den Vorratsbehälter einer Sämaschine, wobei im Einschüttbehälter ein Mischorgan (11, 42, 65) angeordnet ist, **dadurch gekennzeichnet,** daß das Mischorgan (11, 42, 65) im unteren Teil des Einschüttbehälters parallel zur Achse der Schneckenfördereinrichtung (3, 39) mit festliegender Achse eingebaut ist und daß das Mischorgan (11, 42, 65) derart ausgebildet ist, daß die gesamte Menge des in den Einschüttbehälter (2, 38 67) eingefüllten Gutes gleichzeitig intensiv bewegt wird.

2. Beladevorrichtung nach Anspruch 1, dadurch **gekennzeichnet,** daß das Mischorgan (11, 42) sich zumindest im Bereich einer vom Einschüttbehälter (2, 38) zur Fördereinrichtung (3, 39) führenden Einlaßöffnung (9, 45) befindet.

3. Beladevorrichtung nach Anspruch 1 oder 2, dadurch **gekennzeichnet,** daß das Mischorgan (11, 42) Mischelemente (12, 51) aufweist, die eine aufwärts gerichtete Bewegung auf das in den Einschüttbehälter (2, 38) gefüllte Gut ausüben.

4. Beladevorrichtung nach wenigstens einem der Ansprüche 1 bis 3, **gekennzeichnet** durch ein Verschlußelement (10, 46), mit welchem die Einlaßöffnung (9, 45) zur Fördereinrichtung (3, 39) verschließbar ist.

5. Beladevorrichtung nach wenigstens einem der Ansprüche 1 bis 4, dadurch **gekennzeichnet,** daß die Fördereinrichtung oberhalb des Mischorgans wenigstens eine durch ein Verschlußelement verschließbare Auslauföffnung aufweist.

6. Beladevorrichtung nach Anspruch 5, dadurch **gekennzeichnet,** daß die Fördereinrichtung einen Mischeffekt aufweist, so daß ihr unterhalb der Auslauföffnung befindlicher Teil bei geöffneter Auslauföffnung als zusätzliches Mischorgan dient, und daß eine Rücklaufeinrichtung zwischen der Auslauföffnung und dem Einschüttbehälter angeordnet ist.

7. Beladevorrichtung nach wenigstens einem der Ansprüche 1 bis 6, dadurch **gekennzeichnet,** daß die Fördereinrichtung (3, 39, 70) und das Mischorgan (11, 42, 80) gemeinsam von einem Antrieb her angetrieben sind.

8. Beladevorrichtung nach wenigstens einem der Ansprüche 1 bis 7, dadurch **gekennzeichnet,** daß das Mischorgan (11, 42) als Schnecke (12, 51) ausgebildet ist und zusätzlich zu den Schneckenelementen (12, 51) Rührelemente (14, 52) aufweist.

9. Beladevorrichtung nach wenigstens einem der Ansprüche 1 bis 8, dadurch **gekennzeichnet,** daß an dem Einschüttbehälter (38) eine Dosiereinrichtung (50) für Beizmittel angeordnet ist.

10. Beladevorrichtung nach wenigstens einem der Ansprüche 1 bis 9, dadurch **gekennzeichnet,** daß an dem Einschüttbehälter (2) eine Anzeigeeinrichtung (110, 116) zum Anzeigen der eingefüllten Saatgutmenge angeordnet ist.

11. Beladevorrichtung nach wenigstens einem der Ansprüche 1 bis 10, dadurch **gekennzeichnet,** daß die Fördereinrichtung (39) an ihrem Auslaufende (58) ein bewegbares Leitorgan (25, 59) aufweist.

12. Beladevorrichtung nach wenigstens einem der Ansprüche 1 bis 11, dadurch **gekennzeichnet,** daß je eine zumindest annähernd bis zur Hinterseite des Einschüttbehälters (2) reichende Steuereinrichtung (30 bzw. 26) für das Verschlußelement (10) und/oder das Leitorgan (25) vorgesehen ist.

13. Beladevorrichtung nach wenigstens einem der Ansprüche 1 bis 12, mit einem Fahrwerk und einer mit einer Anhängekupplung eines Fahrzeugs kuppelbaren Zugeinrichtung, dadurch **gekennzeichnet,** daß die Mischvorrichtung (1, 37, 64) um die Achse (6) der Laufräder (4) des Fahrwerks (5, 40) von einer Betriebsstellung in eine Transportstellung und zurück schwenkbar ist.

14. Beladevorrichtung nach Anspruch 13, dadurch **gekennzeichnet,** daß die Zugeinrichtung (117) im Bereich des Einschüttbehälters (2) auf der dem Auslaufende (25) der Fördereinrichtung (3) abgewandten Seite (118) des Einschüttbehälters (2) an der Mischvorrichtung (1) angeordnet ist.

15. Beladevorrichtung nach Anspruch 13 oder 14, dadurch **gekennzeichnet,** daß die Zugeinrichtung (117) um eine horizontale Achse in der Höhe verschwenkbar und ihre Anhängekupplung (125) in der Höhe verstellbar ist.

16. Beladevorrichtung nach Anspruch 15, dadurch **gekennzeichnet,** daß die Anhängekupplung (125) der Zugeinrichtung (117) in der Stellung, in weicher die Beladevorrichtung (1) in Betriebsstellung auf dem Boden aufsteht, zumindest in begrenztem Umfang, vorzugsweise etwa 20 cm, auf- und abbewegbar ist.

17. Beladevorrichtung nach wenigstens einem der Ansprüche 1 bis 16, dadurch **gekennzeichnet,** daß verschiedene Antriebsorgane (18, 43, 131, 136, 139) für den Antrieb vorgesehen sind.

18. Beladevorrichtung nach Anspruch 18, dadurch **gekennzeichnet,** daß ein Antriebsorgan als Winkelgetriebe (18, 131) mit wenigstens einer Antriebswelle (16, 132, 133) ausgebildet ist.

19. Beladevorrichtung nach Anspruch 18, dadurch **gekennzeichnet,** daß an die eine Antriebswelle (132) eine Gelenkwelle zum Anschluß an die Schlepperzapfwelle und an die andere Antriebswelle (133) ein Elektromotor (136) anschließbar ist.

**Claims**

1. A mobile loading device for transferring part loads of seed material, particularly of grain, with a filling container (2, 38, 67) for receiving the seed and a worm conveyor arrangement (3, 39), connected to the filling container, for conveying the seed for example into the hopper of a seed drill machine, a mixing unit (11, 42, 65) being located in the filling container,

characterised in that

the mixing unit (11, 42, 65) is incorporated in the lower portion of the filling container parallel to the axis of the worm conveyor arrangement (3, 39) with a fixed axis, and that the mixing unit (11, 42, 65) is so designed that the entire amount of material poured into the filling container (2, 38, 67) is simultaneously intensively moved.

2. A loading device according to Claim 1,

characterised in that

the mixing unit (11, 42) is located at least in the vicinity of an inlet opening (9, 45) leading from the filling container (2, 38) to the conveyor arrangement (3, 39).

3. A loading device according to Claim 1 or 2,

characterised in that

the mixing unit (11, 42) has mixing members (12, 51) which impart an upwardly-directed movement to the material poured into the filling container (2, 38).

4. A loading device according to one of Claims 1 to 3,

characterised

by a closure member (10, 46) by means of which the inlet opening (9, 45) to the conveyor arrangement (3, 39) can be closed.

5. A loading device according to at least one of Claims 1 to 4,

characterised in that

the conveyor arrangement has, above the mixing unit, at least one outlet opening closable by means of a closure member.

6. A loading device according to Claim 5,

characterised in that

the conveyor arrangement has a mixing effect so that its portion located beneath the outlet opening serves, when the outlet opening is open, as an additional mixing unit, and that there is located between the outlet opening and the filling container a return-flow device.

7. A loading device according to at least one of Claims 1 to 6,

characterised in that

the conveyor arrangement (3, 39, 70) and the mixing unit (11, 42, 80) are driven in common from one drive source.

8. A loading device according to at least one of Claims 1 to 7,

characterised in that

the mixing unit (11, 42) is in the form of a worm screw (12, 51) and has, in addition to the worm members (12, 51) stirring members (14, 52).

9. A loading device according to at least one of Claims 1 to 8,

characterised in that

there is located on the filling container (38) a metering device (50) for seed dressing.

10. A loading device according to at least one of Claims 1 to 9,

characterised in that

there is located on the filling container (2) an indicator arrangement (110, 116) for indicating the amount of seed material poured in.

11. A loading device according to at least one of Claims 1 to 10,

characterised in that

the conveyor arrangement (39) has at its outlet end (58) a movable guide member (25, 29).

12. A loading device according to at least one of Claims 1 to 11,

characterised in that

there is provided in each case a control arrangement (30 or 26) extending at least as far as the rear side of the filling container (2), for the closure member (10) and/or the guide member (25).

13. A loading device according to at least one of Claims 1 to 12, with an undercarriage and a towing arrangement which may be coupled to a trailer coupling of a vehicle,

characterised in that

the mixing device (1, 37, 64) is pivotable from a working position into a transport position and back around the axle (6) of the groundwheels (4) of the undercarriage (5, 40).

14. A loading device according to Claim 13,

characterised in that

the towing arrangement (117) is located in the vicinity of the filling container (2) on the side of said filling container (2) facing away from the outlet end (25) of the conveyor arrangement (3), on the mixing device (1).

15. A loading device according to Claim 13 or 14,

characterised in that

the towing arrangement (117) is pivotable vertically around a horizontal axis and its trailer coupling (125) is vertically adjustable.

16. A loading device according to Claim 15,

characterised in that

the trailer coupling (125) of the towing arrangement (117), in the position in which the loading device (1) stands on the ground in the working position, is movable up and down at least to a restricted degree, preferably about 20 cm.

17. A loading device according to at least one of Claims 1 to 16,

characterised in that

various drive units (18, 43, 131, 136, 139) are provided for driving the device.

18. A loading device according to Claim 17,

characterised in that

one drive unit is in the form of an angle gear system (18, 131) with at least one drive shaft (16, 132, 133).

19. A loading device according to Claim 18,

characterised in that

a cardan shaft can be connected to one drive shaft (132) for connection to the tractor's power take-off shaft, and an electric motor (136) can be connected to the other drive shaft (133).

**Revendications**

1. Dispositif de chargement mobile pour le transfert par portion de semence en particulier de céréale, comprenant une trémie de remplissage (2, 38, 67) recevant la semence et un dispositif de transfert à vis (3, 39) relié à la trémie de remplissage pour transférer la semence par exemple dans la trémie d'un semoir, un organe mélangeur (11, 42, 65) étant associé à la trémie de remplissage, dispositif caractérisé en ce que : l'organe mélangeur (11, 42, 65) se trouve dans la partie inférieure de la trémie d'alimentation, parallèle à l'axe du dispositif de transfert à vis (3, 39) avec un axe fixe, et en ce que l'organe mélangeur (11, 42, 65) est réalisé pour que toute la quantité de produit placée dans la trémie de remplissage (2, 38, 67) soit agitée simultanément de manière intensive.

2. Dispositif de chargement selon la revendication 1, caractérisé en ce que l'organe mélangeur (11, 42) se trouve au moins dans la zone d'un orifice d'entrée (9, 45) allant de la trémie de remplissage (2, 38) vers le dispositif de transfert (3, 39).

3. Dispositif de chargement selon la revendication 1 ou 2, caractérisé en ce que l'organe mélangeur (11, 42) comporte des éléments mélangeurs (12, 51) exerçant un mouvement dirigé vers le haut sur le produit placé dans la trémie de remplissage (2, 38).

4. Dispositif de chargement selon au moins l'une des revendications 1 à 3, caractérisé par un élément de fermeture (10, 46) permettant de fermer l'ouverture d'entrée (9, 45) du dispositif de transfert (3, 39).

5. Dispositif de chargement selon au moins l'une des revendications 1 à 4, caractérisé en ce que le dispositif de transfert comporte au-dessus de l'organe mélangeur, au moins un orifice de sortie susceptible d'être fermé par un élément de fermeture.

6. Dispositif de chargement selon la revendication 5, caractérisé en ce que le dispositif de transfert présente un effet mélangeur, en ce que sa partie qui se trouve en-dessous de l'orifice de sortie lorsque cet orifice est ouvert sert d'organe mélangeur supplémentaire et en ce qu'un dispositif de retour est prévu entre l'orifice de sortie et la trémie de remplissage.

7. Dispositif de chargement selon au moins l'une des revendications 1 à 6, caractérisé en ce que le dispositif de transfert (3, 39, 70) et l'organe mélangeur (11, 42, 80) sont entraînés en commun à partir d'un moyen d'entraînement.

8. Dispositif de chargement selon au moins l'une des revendications 1 à 7, caractérisé en ce que l'organe mélangeur (11, 42) est en forme de vis (12, 51) et comporte des éléments agitateurs (14, 52) en plus des éléments de vis (12, 51).

9. Dispositif de chargement selon au moins l'une des revendications 1 à 8, caractérisé en ce que la trémie de remplissage est munie d'un dispositif de dosage (50) pour l'agent de traitement.

10. Dispositif de chargement selon au moins l'une des revendications 1 à 9, caractérisé par un dispositif d'affichage (110, 116) équipant la trémie de remplissage (2) pour afficher la quantité de semence placée dans cette trémie.

11. Dispositif de chargement selon au moins l'une des revendications 1 à 10, caractérisé en ce que le dispositif de transfert (39) comporte un organe de guidage (25, 59) mobile à son extrémité de sortie (58).

12. Dispositif de chargement selon au moins l'une des revendications 1 à 11, caractérisé par au moins un dispositif de commande (30, 26) pour l'élément de fermeture (10) et/ou l'organe de guidage (25), ce dispositif de commande arrivant au moins approximativement jusque du côté arrière de la trémie de remplissage (2).

13. Dispositif de chargement selon au moins l'une des revendications 1 à 12 comportant un châssis et un dispositif de traction susceptibles d'être attelés à l'attelage d'un véhicule, dispositif caractérisé en ce que le dispositif mélangeur (1, 37, 64) peut être basculé autour de l'essieu (6) des roues (4) du châssis (5, 40) d'une position de fonctionnement dans une position de transport et inversement.

14. Dispositif de chargement selon la revendication 13, caractérisé en ce que le dispositif de traction (117) est prévu au niveau de la trémie (2), du côté (118) de la trémie de remplissage (2), opposé à l'extrémité de sortie (25) du dispositif de transfert (3) sur le dispositif mélangeur (1).

15. Dispositif de chargement selon la revendication (13 ou 14), caractérisé en ce que le dispositif de traction (117) peut pivoter en hauteur autour d'un axe horizontal et son attelage (125) est réglable en hauteur.

16. Dispositif de chargement selon la revendication 15, caractérisé en ce que l'attelage de tracteur (125) du dispositif de traction (117) dans la position pour laquelle le dispositif de chargement (1) en position de fonctionnement s'appui sur le sol, permet un relèvement et un abaissement au moins limité, de préférence de l'ordre de 20 cm.

17. Dispositif de chargement selon au moins l'une des revendications 1 à 16, caractérisé par différents organes d'entraînement (18, 43, 131, 136, 139) pour l'entraînement.

18. Dispositif de chargement selon la revendication 17, caractérisé par un organe d'entraînement en forme de renvoi d'angle (18, 131) avec au moins un axe d'entraînement (16, 132, 133).

19. Dispositif de chargement selon la revendication 18, caractérisé en ce que l'un des axes d'entraînement (132) est un arbre à cardans pour la liaison avec la prise de force du tracteur et l'autre axe d'entraînement (133) peut être relié à un moteur électrique (136).

FIG.1

FIG. 2

EP 0 157 429 B1

FIG. 3

FIG. 4

FIG.5

FIG.6

FIG. 7

EP 0 157 429 B1

FIG. 8

EP 0 157 429 B1

FIG. 9

EP 0 157 429 B1